Europäisches Patentamt

European Patent Office

Office européen des brevets

(11) Veröffentlichungsnummer: **0 385 289**
**A2**

# (12) EUROPÄISCHE PATENTANMELDUNG

(21) Anmeldenummer: 90103515.4

(51) Int. Cl.⁵: **B60N 2/06**

(22) Anmeldetag: 23.02.90

(30) Priorität: 02.03.89 DE 3906659

(43) Veröffentlichungstag der Anmeldung:
05.09.90 Patentblatt 90/36

(84) Benannte Vertragsstaaten:
**DE ES FR GB SE**

(71) Anmelder: **Brose Fahrzeugteile GmbH & Co. KG**
**Postfach 1353 Ketschendorfer Strasse 38-50**
**D-8630 Coburg(DE)**

(72) Erfinder: **Neuhauser, Werner**
**Am Wasserturm 7**
**D-8636 Weitramsdorf(DE)**
Erfinder: **Rampel, Hans**
**Anlage 12**
**D-8631 Ahorn, OT Schorkendorf(DE)**
Erfinder: **Dinkel, Emil**
**Lindenstrasse 84**
**D-7253 Renningen(DE)**

(74) Vertreter: **Pretzell, Hellmut, Dipl.-Ing.**
**Brose Fahrzeugteile GmbH & Co.**
**Kommanditgesellschaft Patentabteilung**
**Postfach 1353, Ketschendorfer Strasse 38-50**
**D-8630 Coburg(DE)**

(54) Sitzführung.

(57) Sitzführung mit einer Laufschienenanordnung aus Führungsschienen und Gleitschienen sowie einer Verstelleinrichtung 8, 10, 11 zum Längsverfahren eines mit den Führungsschienen verbundenen Fahrzeugsitzes auf den Gleitschienen. Die Verstelleinrichtung ist über einen mindestens einen mäanderförmigen Deformationsbereich 20, 45 aufweisenden Verbindungsträger mit einer Gleitschiene verbunden oder diese als Verbindungsträger ausgebildet.

FIG. 2

EP 0 385 289 A2

## Sitzführung

Die Erfindung betrifft eine Sitzführung der im Oberbegriff des Anspruchs 1 genannten Art.

Bei bekannten Sitzführungen sind die in der Regel aus einem Zahnstangentrieb oder einem Spindeltrieb bestehenden Verstelleinrichtungen zum Längsverfahren des Fahrzeugsit zes so zwischen den längsbeweglichen Führungsschienen und den ortsfest mit dem Fahrzeugboden verbundenen Gleitschienen angeordnet, daß die bei einem Unfall aus der Massenträgheit resultierenden, am Fahrzeugsitz angreifenden Kräfte von den Führungsschienen über die Verstelleinrichtung und die Gleitschienen in den Fahrzeugboden eingeleitet werden.

Damit die Verstelleinrichtung diesen hohen Belastungen standhält, werden insbesondere die eine Schwachstelle bildenden Stellglieder, nämlich die Gewindespindel bzw. die Zahnstange, entsprechend stark dimensioniert. Auf diese Weise kann zur Begrenzung möglicher Unfallverletzungen ein Vorschnellen des mit den Führungsschienen verbundenen Fahrzeugsitzes infolge eines Bauteilversagens der Gewindespindel oder der Zahnstange verhindert werden.

Eine entsprechende Auslegung der Stellglieder führt jedoch zu einer Dimensionierung, die ein hohes Gewicht und einen wenig kompakten Aufbau der Verstelleinrichtung bedingt.

Aus der DE 33 45 405 A1 ist eine Sitzführung für einen längsverschiebbaren Fahrzeugsit be- kannt, bei der der Rahmen des Fahrzeugsitzes beidseitig mit Gleitschuhen versehen ist, die in einer am Fahrzeugboden fest angeordneten Gleitschiene verschiebbar gelagert sind. Eine mit dem Sitzrahmen fest verbundene Längsschiene ist in einem ortsfesten Lagerbock verschiebbar gehalten und unter Zwischenschaltung eines Gleitstückes geführt. Im Lagerbock ist eine Spindelmutter gelagert, die mit einer Verstellspindel einer Spindel-Verstelleinrichtung zusammenwirkt, wobei das eine Ende der Verstellspindel in einem Getriebe mit Motor derart gelagert ist, daß die Verstellspindel bei eingeschaltetem Motor in Drehung versetzt wird und damit über die ortsfest gehaltene Spindelmutter die Längsschiene und den Sitzrahmen in der einen oder anderen Richtung bewegt.

Der Lagerbock ist aus einem Blechzuschnitt gebildet und weist zwei Paar Seitenteile auf, deren Enden jeweils mit dem Fahrzeugboden verschweißt sind. Zwischen den beiden Seitenteilpaaren ist eine L-förmige Ausnehmung vorgesehen, die sich in Verschieberichtung erstreckt und in der die am Sitzrahmen fest angebrachte Längsschiene gleitet. Die Längsschiene ist dementsprechend an ihrer oberen und an ihrer unteren Längskante mit einer rechtwinklig abgebogenen Führungswange versehen, die sich in entgegengesetzte Richtungen erstrecken, so daß die Längsschiene ein Z-Profil aufweist. Zwischen der Längsschiene und dem Auflager am Lagerbock ist ein Gleitstück aus Kunststoff eingelegt, das das Klappern der Schiene in ihrer Führung im Lagerbock verhindern soll.

Zur verbesserten, spielfreien Lagerung der Längsschiene im Lagerbock und um sicherzustellen, daß sich die Längsschiene im Falle eines Fahrzeugzusammenstoßes derart verformt, daß sie sich gegen ein Herausrutschen aus ihrer Führung im Lagerbock selbsttätig sperrt, ohne daß ein besonderes Gesperre erforderlich ist, ist an dem unteren, seitlich abgebogenen Abschnitt der Längsschiene ein in Richtung auf den Fahrzeugboden zugeneigter Schenkel angeformt, der einen spitzen Winkel mit dem seitlich abgebogenen Abschnitt der Längsschiene einschließt. Der lotrechte Abschnitt der Längsschiene und der seitlich abstehende Abschnitt schließen dabei einen Winkel ein, der kleiner als ein rechter Winkel ist.

Diese Ausgestaltung der Längsschiene bewirkt zwar ein Verformen der Längsschiene im Falle eines Unfalls, so daß sie sich gegen ein Herausrutschen aus ihrer Führung im Lagerbock selbsttätig sperrt, diese spezielle Konfiguration der Längsschiene vermag aber keine Kräfte in Längsrichtung der Laufschienenanordnung und damit der Sitzführung aufzunehmen, so daß gleichwohl die Gefahr besteht, daß der Fahrzeugsitz im Falle eines Unfalls aus seiner Verankerung gerissen wird. Die von der Längsschiene im Falle eines Unfalls absorbierte Energie wird ausschließlich zur Eigenverformung im Sinne des Verklemmens mit dem Lagerbock umgesetzt.

Aus der DE 34 01 230 A1 ist eine Sitzführung bekannt, bei der die insbesondere bei Auffahrunfällen hohen Beschleunigungskräfte über mit den Führungsschienen verbundene Stoßfänger in den Fahrzeugboden abgeleitet werden, ohne die Verstelleinrichtung zu belasten. Nachteilig an dieser bekannten Sitzführung ist jedoch, daß die Ableitung der Belastung in den Fahrzeugboden richtungsabhängig ist.

Die bekannte Vorrichtung funktioniert lediglich in dem Fall einer entgegen der normalen Fahrtrichtung auf das Fahrzeug einwirkenden Kraft. Für den Fall, daß ein anderes Fahrzeug auf das mit der oben beschriebenen Sitzführung ausgerüstete Fahrzeug auffährt, versagt die Vorrichtung. Zudem wird durch den Stoßfänger ein zusätzliches Bauteil in die Sitzführung integriert, das nur im Extremfall in den in der Sitzführung wirkenden Kraftfluß mit einbezogen, ansonsten aber überflüssig ist und lediglich zu einer Gewichtserhöhung führt.

Der vorliegenden Erfindung liegt die Aufgabe zugrunde, eine Sitzführung der eingangs genannten Art mit einer Einrichtung zu versehen, die es ermöglicht, daß die Verstelleinrichtung unabhängig von der Belastungsrichtung von unfallbedingten, hohen Kräften frei bleibt und auch nach stärkeren Kollisionen funktionsfähig ist.

Diese Aufgabe wird erfindungsgemäß durch das kennzeichnende Merkmal des Anspruchs 1 gelöst.

Entsprechend der erfindungsgemäßen Lösung weist der Verbindungsträger eine Krafteinleitung auf, in der mindestens ein in Längsrichtung der Laufschienenanordnung wirksamer Deformationsbereich vorgesehen ist. Damit wird die bei einem Zusammenstoß auf die Sitzführung einwirkende Kraft in einen Bereich umgeleitet, der nicht der Funktionssicherheit der Verstelleinrichtung dient sondern ausschließlich zur Verbindung der Gleitschienen mit dem Antriebsglied vorgesehen ist.

Selbst nach stärkeren Kollisionen bleibt die Sitzführung funktionsfähig und die Verstelleinrichtung einsatzbereit, ohne daß eine Reparatur oder ein Austausch des Verbindungsträgers erforderlich ist. Aber auch bei extrem starken Belastungen bleibt die Verstelleinrichtung wirksam und es ist allenfalls erforderlich, den Verbindungsträger bzw. die Schubstange als Krafteinleitungsglied zu ersetzen.

Beim Gegenstand der vorliegenden Erfindung wird daher die Verstelleinrichtung nicht so ausgestaltet, daß sie bei einem Zusammenstoß verformt wird und damit eine Trennung der Einzelteile der Verstelleinrichtung verhindert, sondern daß sie die bei einem Zusammenstoß freiwerdende Energie so umleitet, daß zum einen der Zusammenhalt der Einzelteile der Verstelleinrichtung gewährleistet ist und zum anderen die der Sitzverstellung dienenden Teile der Verstelleinrichtung von größeren Kräften verschont bleiben, so daß ihre Funktionssicherheit auch nach einer Kollision gewährleistet ist.

Durch die Ausbildung eines Deformationsbereiches ist es möglich, die großen Massenkräfte, die insbesondere zu einer Zerstörung der Stellglieder führen können, in einem hierzu bestimmten Bereich der Sitzführung zu absorbieren, d.h. unschädlich zu machen, ohne daß hierdurch die Funktion der Sitzführung beeinträchtigt würde. Zudem ist der Verbindungsträger so in die Sitzführung integriert, daß er der Anlenkung der Verstelleinrichtung an eine Gleitschiene dient und damit auch bei normalen Betriebsverhältnissen des Kraftfahrzeuges ein für die Funktion der Sitzführung wesentliches Bauteil darstellt.

Gemäß einem bevorzugten Ausführungsbeispiel besteht die Krafteinleitung aus einer sich parallel zur Gleitschiene in Längsrichtung erstreckenden Schubstange, die im Deformationsbereich mäanderförmig ausgebildet ist. In dem mäanderförmig ausgebildeten Deformationsbereich ist die Schubstange sowohl mit der Gleitschiene als auch mit dem Antriebsglied verbunden.

Durch diese Funktionstrennung wird eine einwandfreie Gesamtfunktion des Verbindungsträgers sowie eine sichere Aufnahme des Antriebsgliedes durch den Verbindungsträger erreicht.

Nach einem weiteren Merkmal der Erfindung weist die Schubstange mindestens zwei mäanderförmig ausgebildete Deformationsbereiche auf, die beide mit der Gleitschiene verbunden sind, wobei mindestens ein Deformationsbereich mit dem Antriebsglied oder dem Aufnahmeelement verbunden ist.

Hierdurch ist gewährleistet, daß die kraftabsorbierende Wirkung der Krafteinleitung richtungsunabhängig, d.h. sowohl in Fahrtrichtung als auch entgegengesetzt hierzu gegeben ist.

Zur zusätzlichen Absorption von auf die Sitzverstellung einwirkenden Kräften weisen sowohl die Schubstange als auch ein mit der Schubstange verbundenes, das Antriebsglied aufnehmendes Aufnahmeelement als Dämpfungselemente ausgebildete Einrichtungen zur Aufnahme von Verformungsenergie auf. Hierdurch wird eine vorteilhafte Kraftabsorption in mehreren Stufen ermöglicht, so daß die aus der Beschleunigung resultierenden Massenkräfte besonders schonend für die Verstelleinrichtung verzögert werden.

Gemäß einem bevorzugten Ausführungsbeispiel besteht die Verstelleinrichtung aus einem eine Zahnstange und ein Antriebsrad aufweisenden Zahnstangentrieb, wobei der Verbindungsträger mit der Zahnstange verbunden ist. Hierdurch ist ein wirkungsvoller Schutz vor Beschädigungen der Zahnstange durch überhöhte Massenkräfte gegeben, so daß eine gewichts- und materialsparende Dimensionierung der Zahnstange sowie die Verwendung kostengünstiger Werkstoffe geringerer Qualität möglich wird.

Nach einer vorteilhaften Weiterbildung ist der Verbindungsträger aus einer Krafteinleitung und einer Zahnstangenaufnahme gebildet. Durch diese Funktionstrennung wird eine einwandfreie Gesamtfunktion des Verbindungsträgers sowie eine sichere Aufnahme der Zahnstange durch den Verbindungsträger erreicht.

Sowohl die Krafteinleitung als auch die Zahnstangenaufnahme weisen Bereiche zur Umwandlung der äußeren Kräfte in Verformungsenergie auf. Hierdurch wird eine vorteilhafte Kraftabsorption in mehreren Stufen ermöglicht, so daß die aus der Beschleunigung resultierenden Massenkräfte besonders schonend für die Verstelleinrichtung verzögert werden.

Nach einem vorteilhaften Merkmal der Erfindung besteht die Zahnstangenaufnahme aus einem stirnseitig geschlossenen U-Profil, wobei zwischen Enden der in das U-Profil eingelegten Zahnstange und Endplatten des U-Profils Verformungselemente vorgesehen sind. Diese Verformungselemente sind vorzugsweise als Dämpfungselemente aus Gummi ausgebildet.

Alternativ hierzu ist vorgesehen, daß die Zahnstangenaufnahme Ausnehmungen zur Aufnahme der Dämpfungselemente aufweist und die Zahnstange mit an ihrer Unterseite befindlichen Fortsätzen in den Dämpfungselementen geführt ist.

Bei einem weiteren bevorzugten Ausführungsbeispiel besteht die Verstelleinrichtung aus einem eine Spindel und eine Spindelmutter aufweisenden Spindeltrieb, wobei der Verbindungsträger mit der Spindelmutter verbunden ist. Hierbei ist der Verbindungsträger aus einer Krafteinleitung und einer Spindelmutteraufnahme gebildet.

Nachfolgend werden die bevorzugten Ausführungsbeispiele anhand der Figuren näher dargestellt. Es zeigen:

Figur 1 eine Sitzführung mit einer als Zahnstangentrieb ausgebildeten Verstelleinrichtung,

Figur 2 einen Querschnitt der Sitzführung nach Figur 1 gemäß Schnittlinienverlauf II-II mit der Darstellung einer Zahnstangenaufnahme,

Figur 3 eine Querschnittsdarstellung gemäß Schnittlinienverlauf III-III in Figur 2,

Figur 4 eine Draufsicht auf eine gegenüber Figur 2 geänderte Zahnstangenaufnahme,

Figur 5 eine Querschnittsdarstellung gemäß Schnittlinienverlauf V-V in Figur 4,

Figur 6 die Sitzführung mit einer als Spindeltrieb ausgebildeten Verstelleinrichtung und

Figur 7 einen Querschnitt durch die Sitzführung nach Figur 6 gemäß Schnittlinienverlauf VII-VII.

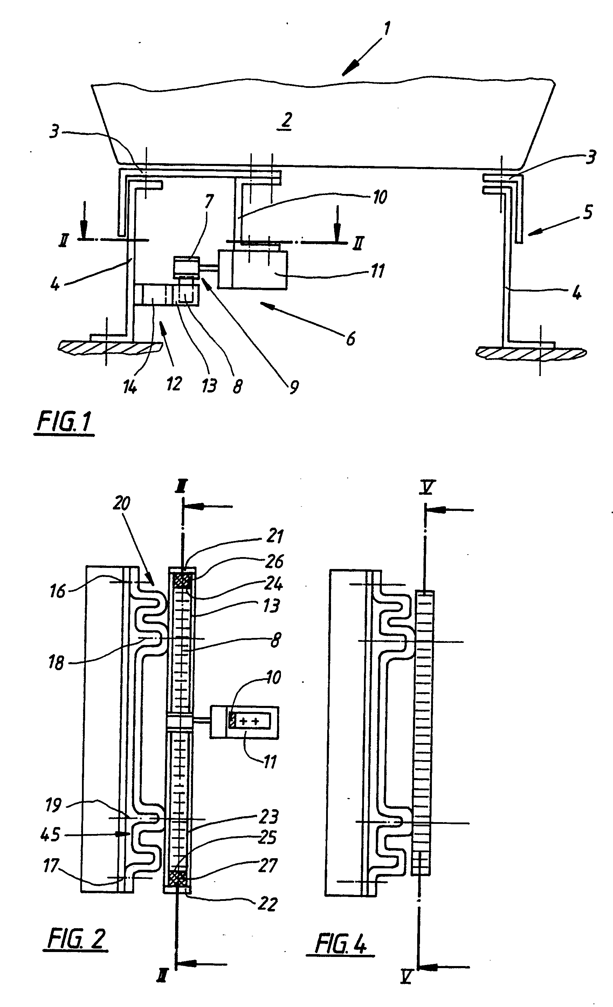

Figur 1 zeigt eine Sitzführung 1 zum Längsverfahren eines Kraftfahrzeugsitzes 2 gegenüber dem Fahrzeugboden. Die Sitzführung 1 besteht im wesentlichen aus einer Führungsschienen 3 sowie Gleitschienen 4 aufweisenden Laufschienenanordnung 5 und einer das Längsverfahren der Führungsschienen 3 gegenüber den Gleitschienen 4 ermöglichenden Verstelleinrichtung 6.

Bei einem bervorzugten Ausführungsbeispiel besteht die Verstelleinrichtung 6 aus einem ein Antriebsrad 7 und eine Zahnstange 8 aufweisenden Zahnstangentrieb 9. Das Antriebsrad 7 wird von einem mit einer Führungsschiene 3 über ein Trägerblech 10 verbundenen Elektromotor 11 angetrieben und sorgt so je nach Drehrichtung für einen Vorschub der mit einer Gleitschiene 4 verbundenen Zahnstange 8 in die eine oder andere Richtung.

Zur Anlenkung der Zahnstange 8 an die Gleitschiene 4 ist ein Verbindungsträger 12 vorgesehen, der aus einer die Zahnstange 8 aufnehmenden Zahnstangenaufnahme 13 und einer diese unmittelbar mit der Gleitschiene 4 verbindenden Krafteinleitung 14 gebildet ist.

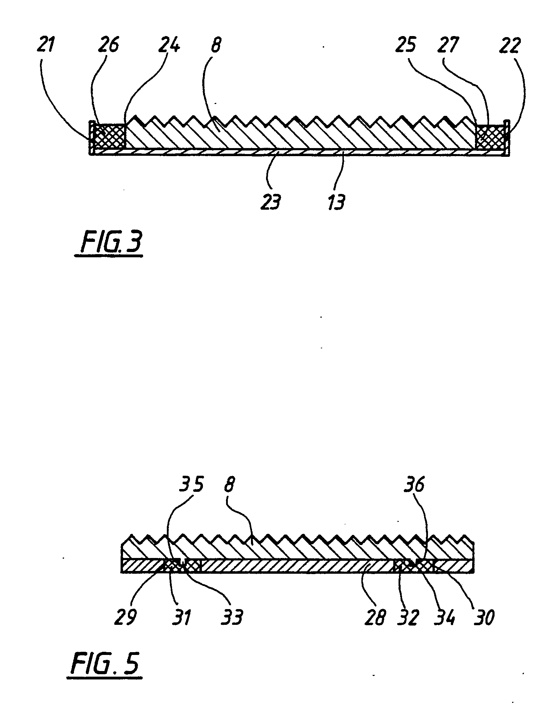

Figur 2 und 3 zeigen die als Schubstange 14 ausgeführte Krafteinleitung. Die Schubstange 14 ist an jeweils zwei Verbindungsstellen 16, 17 bzw. 18, 19 mit einer Gleitschiene 4 bzw. der Zahnstangenaufnahme 13 verbunden. Zwischen den Verbindungsstellen 16, 18 und 17, 19 weist die Schubstange 14 jeweils einen mäanderförmig ausgebildeten Deformationsbereich 20, 45 auf.

Die Zahnstangenaufnahme 13 besteht aus einem mit Endplatten 21, 22 an seinen Enden abgeschlossenen U-Profil 23. In dieses U-Profil 23 ist die Zahnstange 8 eingelegt, wobei zwischen den Enden 24, 25 der Zahnstange 8 und den Endplatten 21, 22 aus Gummi bestehende Dämpfungselemente 26, 27 angeordnet sind.

Treten infolge hoher Beschleunigungen, bspw. bei einem Auffahrunfall durch das Insassengewicht verursachte, große Massenkräfte auf, so werden diese über den Fahrzeugsitz 2 und die Führungsschienen 3 in die Verstelleinrichtung 6 geleitet. Infolge der guten inneren Dämpfungseigenschaften der Dämpfungslemente 26, 27 und ihrer Anordnung an beiden Enden 24, 25 der Zahnstange 8 wird unabhängig von der Belastungsrichtung ein erster Anteil der Belastung wegen der möglichen Relativverschiebung der Zahnstange 8 gegenüber der Zahnstangenaufnahme 13 von den Dämpfungselementen 26, 27 aufgenommen.

Der verbleibende Anteil der Belastung, der nicht in den Dämpfungselementen 26, 27 in Verformungsenergie umgewandelt werden kann, wird über die Verbindungsstellen 18 bzw. 19 von der Zahnstangenaufnahme 13 in die Schubstange 14 eingeleitet. Unabhängig von der Belastungsrichtung kommt es dann zu einer Längung bzw. Stauchung der zwischen den Verbindungsstellen 16, 18 bzw. 17, 19 angeordneten Deformationsbereiche 20, 45.

Insgesamt gesehen kommt es also zu einer allmählichen Verzögerung und Umwandlung der auf die Verstelleinrichtung, insbesondere die Zahnstange, wirkenden großen Beschleuni gungskräfte in Verformungsenergie, so daß die Zahnstange selbst nicht von den Kraftauswirkungen betroffen ist.

Figur 4 zeigt eine alternative Ausführung einer Zahnstangenaufnahme 28, die in Figur 5 im Querschnitt dargestellt ist. Die Zahnstangenaufnahme 28 weist einen rechteckförmigen Querschnitt und Ausnehmungen 29, 30 zur Aufnahme von Dämpfungselementen 31, 32 auf. In den Dämpfungselementen 31, 32 ist die Zahnstange 8 mit zapfenförmigen Fortsätzen 33, 34 geführt, die in hierfür vorgesehenen Bohrungen 35, 36 der Dämpfungselemente 31, 32 eingreifen.

Diese Alternative bietet den Vorteil, daß die Länge der Zahnstange 8 mit der Bauteillänge der Zahnstangenaufnahme 28 übereinstimmt, was insgesamt einer kompakten Ausführung der Verstelleinrichtung 6 zugute kommt.

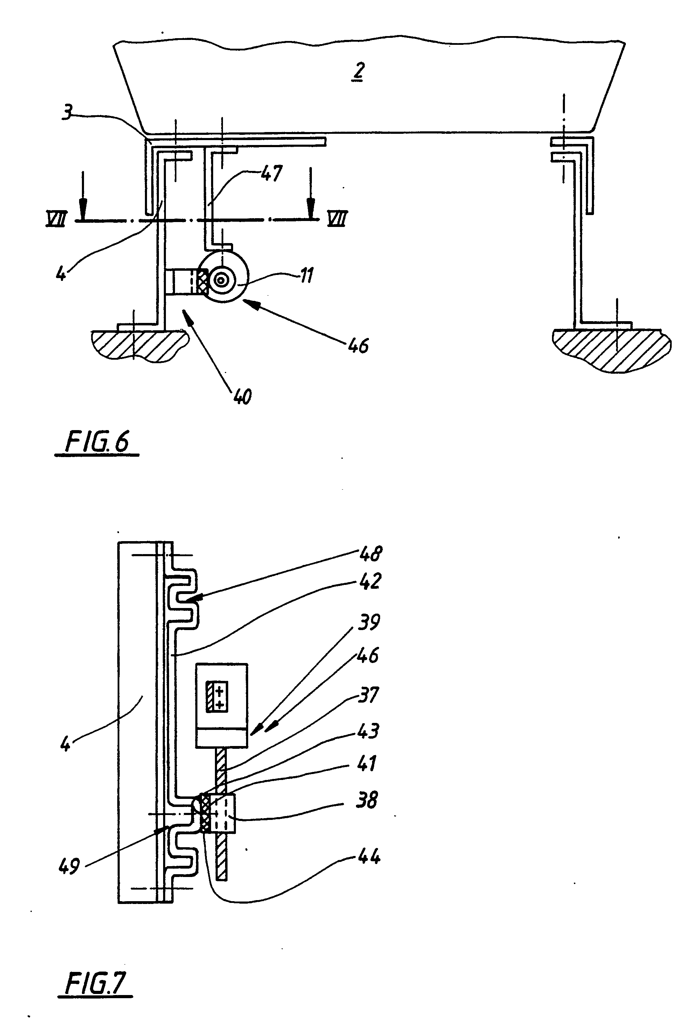

Figur 6 zeigt ein weiteres bevorzugtes Ausführungsbeispiel der Erfindung mit einer Verstelleinrichtung 46, die aus einem eine Spindel 37 und eine Spindelmutter 38 aufweisenden Spindeltrieb 39 besteht. Analog zum oben beschriebenen Ausführungsbeispiel ist der die Verstelleinrichtung 46 antreibende Elektromotor 11 über ein Trägerblech 47 mit einer Führungsschiene 3 verbunden. Die von dem Elektromotor 11 angetriebene Spindel 37 dreht in der Spindelmutter 38, die mit einer Gleitschiene 4 verbunden ist, um so ein Längsverfahren des mit den Führungsschienen 3 verbundenen Fahrzeugsitzes 2 auf den Gleitschienen 4 zu ermöglichen.

Die Verbindung der Spindelmutter 38 mit einer Gleitschiene 4 erfolgt ähnlich wie beim vorigen Ausführungsbeispiel über einen Verbindungsträger 40. Der Verbindungsträger 40 besteht aus einer Spindelmutteraufnahme 41 und einer Krafteinleitung 42. Diese ist über eine Verbindungsstelle 43 mit der Spindelmutteraufnahme 41 verbunden. Bei diesem Ausführungsbeispiel ist die Spindelmutteraufnahme 41 selbst als Dämpfungselement 44 ausgeführt.

Auch bei diesem Ausführungsbeispiel ergeben sich die vorstehend bereits ausführlich beschriebenen Vorteile der zweistufigen Umwandlung schädlicher äußerer Belastungen infolge hoher Beschleunigungskräfte in für die Verstelleinrichtung 46, insbesondere die Spindel 37, unschädliche Verformungsenergie. Diese Umwandlung findet zum einen statt im Dämpfungselement 44, zum andern ergibt sie sich in den Deformationsbereichen 48, 49 der mit einer Gleitschiene 4 verbundenen Krafteinleitung 42.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen.

**Ansprüche**

1. Sitzführung mit einer Laufschienenanordnung aus Führungsschienen und Gleitschienen sowie einer Verstelleinrichtung zum Längsverfahren eines mit den Führungsschienen verbundenen Fahrzeugsitzes auf den Gleitschienen, wobei die Verstelleinrichtung eine Antriebseinrichtung, die aus einem Antrieb und einem Antriebsglied besteht, und einen mit einer Gleitschiene und dem Antriebsglied verbundenen Verbindungsträger aufweist, **dadurch gekennzeichnet,** daß der Verbindungsträger (12, 40) eine Krafteinleitung (14; 42) enthält, in der mindestens ein in Längsrichtung der Laufschienenanordnung wirksamer Deformationsbereich (20, 45; 48, 49) vorgesehen ist.

2. Sitzführung nach Anspruch 1, **dadurch gekennzeichnet,** daß die Krafteinleitung (14; 42) aus einer sich parallel zur Gleitschiene (4) in Längsrichtung erstreckenden Schubstange besteht, die im Deformationsbereich (20, 45; 48, 49) mäanderförmig ausgebildet ist.

3. Sitzführung nach Anspruch 1 oder 2, **dadurch gekennzeichnet,** daß die Schubstange (14; 42) in dem mäanderförmig ausgebildeten Deformationsbereich (20, 45; 48, 49) sowohl mit der Gleitschiene (4) als auch mit dem Antriebsglied (8, 13, 28; 38) verbunden ist.

4. Sitzführung nach einem der vorangehenden Ansprüche, **dadurch gekennzeichnet,** daß sowohl die Schubstange (14; 42) als auch ein mit der Schubstange (14; 42) verbundenes, das Antriebsglied (8; 38) aufnehmendes Aufnahmeelement (13, 28; 41) als Dämpfungselemente (26, 27; 44) ausgebildete Einrichtungen zur Aufnahme von Verformungsenergie aufweisen.

5. Sitzführung nach einem der vorangehenden Ansprüche, **dadurch gekennzeichnet,** daß die Schubstange (14; 42) mindestens zwei mäanderförmig ausgebildete Deformationsbereiche (20, 45; 48, 49) aufweist, die beide mit der Gleitschiene (4) verbunden sind und daß mindestens ein Deformationsbereich (20, 45; 48, 49) mit dem Antriebsglied (8, 13, 28; 38) oder dem Aufnahmeelement (13, 28; 41) verbunden ist.

6. Sitzführung nach einem der vorangehenden Ansprüche, bei der die Verstelleinrichtung aus einem eine Zahnstange und ein Antriebsritzel aufweisenden Zahnstangenantrieb besteht, **dadurch gekennzeichnet,** daß der Verbindungsträger (12) aus der Schubstange (14) und einer die Zahnstange (8) aufnehmenden Zahnstangenaufnahme (13, 28) besteht.

7. Sitzführung nach Anspruch 6, **dadurch gekennzeichnet,** daß sowohl die Schubstange (14) als auch die Zahnstangenaufnahme (13, 28) Einrichtungen zur Aufnahme von Verformungsenergie aufweisen.

8. Sitzführung nach Anspruch 6 oder 7, **dadurch gekennzeichnet,** daß die Zahnstangenaufnahme (13) aus einem stirnseitig geschlossenen U-Profil (23) besteht, wobei zwischen den Enden (24, 25) der in das U-Profil (23) eingelegten Zahnstange (8) und Endplatten (21, 22) des U-Profils (23) als Dämpfungselemente (26, 27) ausgebildete Verformungselemente vorgesehen sind.

9. Sitzführung nach einem der Ansprüche 6 bis 8, **dadurch gekennzeichnet,** daß die Zahnstangenaufnahme (28) Ausnehmungen (29, 30) zur Aufnahme von Dämpfungselementen (31, 32) aufweist, und die Zahnstange (8) mit an ihrer Unterseite befindlichen Fortsätzen (33 ,34) in den Dämpfungselementen (31, 32) geführt ist.

10. Sitzführung nach einem der Ansprüche 1 bis 5, bei der die Verstelleinrichtung aus einem eine Spindel und eine Spindelmutter aufweisenden Spindelantrieb besteht, **dadurch gekennzeichnet,** daß der Verbindungsträger (40) mit der Spindelmutter (38) verbunden ist.

11. Sitzführung nach Anspruch 10, **dadurch gekennzeichnet,** daß der Verbindungsträger (40) aus der Schubstange (42) und einer Spindelmutteraufnahme (41) besteht.

1

2

3

II

4

7

10

II

11

6

14 12 13 8 9

5

3

4

_FIG.1_

20

I

II

16

18

19

45

17

21
26
24
13

8

10

11

23
25
27

22

I

_FIG. 2_

V

V

_FIG.4_

21  26  24  8          25  27  22

23  13

FIG. 3

35  8          36

29  31  33          28  32  34  30

FIG. 5

FIG.6

FIG.7